# EUROPÄISCHE PATENTSCHRIFT

(11) **EP 1 152 228 B1**
(45) Veröffentlichungstag und Bekanntmachung des Hinweises auf die Patenterteilung: **07.09.2005**
(21) Anmeldenummer: 01200974.2
(22) Anmeldetag: 15.03.2001
(51) Int. Cl.: G01G 13/02, B65D 88/68

(54) **Dosiereinrichtung für das Befüllen von Gefässen mit kleinem Öffnungsquerschnitt**
Dosing device for filling containers with small aperture
Dispositif de dosage pour le remplissage des recipients avec petite ouverture

(30) Priorität: 06.04.2000 CH 6832000
(43) Veröffentlichungstag der Anmeldung: 07.11.2001
(73) Patentinhaber: Mettler-Toledo GmbH, 8606 Greifensee (CH)
(72) Erfinder: Lüchinger, Paul, 8610 Uster (CH)

(56) Entgegenhaltungen:
- EP-A- 0 406 164
- DE-A- 2 923 672
- FR-A- 2 365 107
- FR-A- 2 663 008

## Beschreibung

Die Erfindung betrifft eine Dosiereinrichtung für das Abfüllen von trockenem und/oder pulverförmigem Schüttgut - insbesondere toxischen Substanzen - mit hoher Präzision in kleine auf einer Waage platzierten Gefässe. Das Schüttgut wird mittels einer Transport- und Ausstossvorrichtung einem Vorratsbehälter entnommen.

Dosiereinrichtungen für trockenes und/oder pulverförmiges Schüttgut, beispielsweise Farbstoffpulver sind bekannt und im Einsatz. So wird in der EP-A-0 406 164 eine Vorrichtung zum Dosieren beschrieben, die aus einem Ausgabebehälter mit einem weitgehend verschliessbaren Auslass an seiner Unterseite und einer mit einem Fördermittel beschickbaren Waage besteht. Als Verschluss dient ein sich nach oben verjüngender vertikal nach unten verstellbarer Ventilkörper, der in seiner Offenstellung rotiert und Mittel zum Fördern des Gutes in Richtung der Auslassöffnung aufweist.

Die beschriebene Einrichtung eignet sich schlecht für das Dosieren von Schüttgut in Gefässe mit einem kleinen Öffnungsquerschnitt. Die sich nach oben verjüngende Struktur des Ventilkörpers sowie dessen Rotation ergeben eine Radial- bzw. Horizontalkomponente der Schüttgutpartikel am Auslass und verursachen demzufolge eine Streuung, die selbst über einen relativ breiten Öffnungsquerschnitt eines abzufüllenden Gefässes hinausreichen kann. Damit sind Verluste des Schüttguts oder gar Verunreinigungen der Umgebung beim Dosieren in Gefässe mit einem kleineren Öffnungsquerschnitt, als dem des ringförmigen Auslassspalts nicht in jedem Fall vermeidbar, was möglicherweise einen Reinigungsschritt mit hohem Aufwand nach sich zieht.

Ein hoher Reinigungsaufwand - insbesondere beim Dosieren von toxischen Pulvern - kann sich auch für die beschriebene Dosiereinrichtung selbst ergeben, vor allem im Bereich des Ventils und des Auslasses, jedoch auch für den Ausgabebehälter selbst, durch dessen Inneres eine Antriebswelle führt und demzufolge es sich um teure, speziell zum Zwecke des Dosierens hergestellte Ausgabebehälter handelt. Auch kann diese Achse den Vorgang des Befüllens vor dem eigentlichen Dosiervorgang erschweren.

Der Erfindung liegt die Aufgabe zugrunde, eine Einrichtung zur Verfügung zu stellen, mit welcher sich Schüttgut-Proben mit gerichteter Austragung direkt, ohne Streuverluste in Gefässe mit einem kleinen Öffnungsquerschnitt dosieren lassen, die einen niedrigen Reinigungsaufwand erfordert und die einfach zu handhaben ist.

Diese Aufgabe wird erfindungsgemäss mit einer Dosiereinrichtung mit den Merkmalen des Anspruchs 1 gelöst.

Die Dosiereinrichtung für Schüttgüter, vorwiegend pulverförmige Substanzen, wird gebildet von einer mit dem zu dosierenden Schüttgut beschickbaren Waage, einem Vorratsbehälter und einem zum Verschliessen des Vorratsbehälters an dessen Unterseite aufsetzbaren Deckel, in welchen eine Transport- und Ausstossvorrichtung integriert ist. Die Transport- und Ausstossvorrichtung enthält einen vertikal verstellbaren und rotierbaren Transportkörper, der den Auslass für das zu dosierende Schüttgut weitgehend verschliessen kann. Der Transportkörper weist auf seiner ringförmigen Unterseite ein sich nach unten verjüngendes Profil auf. Er greift damit in ein darauf abgestimmtes sich nach unten verjüngendes Profil einer ringförmigen Transportvertiefung des Deckels ein. Die vorzugsweise leicht konisch sich nach unten erweiternd ausgebildete Auslassöffnung befindet sich seitlich vom Zentrum auf der Ringbahn des Transportkörpers und dient der gezielten örtlichen Austragung des Schüttguts.

Die vorteilhaften Wirkungen der Anordnung liegen darin, dass die Waage, auf deren Waagschale sich das abzufüllende Gefäss befindet, durch das örtliche gezielte Austragen nicht verunreinigt wird und das Wägeresultat nicht durch neben dem Gefäss jedoch auf der Waagschale befindliche Partikel verfälscht wird.

Durch das Zusammenspielen mehrerer veränderlicher Parameter, wie der Drehzahl für die Rotation des Transportkörpers und dessen Höheneinstellung, was zu einer Veränderung des Öffnungsquerschnitts zum Vorratsraum führt, kann die Ausstossrate den Anforderungen des Dosiervorgangs angepasst werden. Somit kann am Anfang eines Dosiervorgangs eine grosse Menge des Schüttguts und gegen dessen Ende eine zunehmend kleiner werdende Menge ausgestossen werden.

Die durch die Erfindung erzielte Vereinfachung im Aufbau des Vorratsbehälters und die Integration der Transport- und Ausstossvorrichtung in den Deckel des Vorratsbehälters erlauben eine vereinfachte Handhabung beispielsweise beim Austausch des Vorratsbehälters durch einen weiteren mit zu dosierendem Schüttgut. Die Verwendung preiswerter, beispielsweise polymerer, Werkstoffe für die in den Deckel integrierte Transport- und Ausstossvorrichtung verringert den Reinigungsaufwand - insbesondere beim Dosieren von toxischen pulverförmigen Substanzen - dahingehend, dass der Deckel samt Transport- und Ausstossvorrichtung lediglich für eine einzige Befüllung des Vorratsbehälters, der nach Verschluss der Auslassöffnung auch als Lagerbehälter verwendet werden kann, vorgesehen ist, um nach vollständiger Entleerung desselben durch die stattfindenden Dosiervorgänge anschliessend entsorgt zu werden.

In einer bevorzugten Ausführungsform der Erfindung weist der Transportkörper die Form eines sich nach oben zur Achse der Ringbahn verjüngenden Kegelmantels auf, welcher mit Öffnungen für den Durchtritt des zu dosierenden Schüttguts versehen ist. Die die Öffnungen abschliessenden Speichen können als Mitnahmemittel, insbesondere als Schaufeln ausgebildet sein.

Weitere vorteilhafte Ausführungen der Erfindung sehen eine Vorrichtung zur Mitnahme der Partikel des Schüttguts auf der ringförmigen Unterseite des Transportkörpers vor. Diese können quer zum Ringumfang als Transportschlitze, als Transportstege oder als im Ringumfang liegende ausgeformte Nut ausgebildet sein. Ebenso ist die Ausbildung eines zweiteiligen Transportkörpers möglich, bei dem die Vorrichtung zur Mitnahme der Partikel, vorzugsweise austauschbar, aufgesetzt ist. Dieses aufgesetzte Teil des Transportkörpers erlaubt es, Material und Form der Konsistenz des Schüttguts anzupassen. Geeignet ist Weichpolymer, beispielsweise Silikon; in diesem Falle kann die Vorrichtung zur Mitnahme der Partikel als quer zum Ringumfang angeordnete Finger oder Bürsten ausgebildet sein. Unterschiedliche Transportkörper haben den Vorteil, die Einrichtung der Konsistenz (rieselfähig, pappig etc.) des zu dosierenden Schüttguts anpassen zu können. Dabei kann das Profil an der ringförmigen Unterseite des Transportkörpers bei allen Varianten im Wesentlichen gleich sein, so dass die ringförmige Transportvertiefung im Deckel als Gegenstück zum Transportkörper für alle Varianten gleich sein kann, also nur in einer Ausführungsform benötigt wird. Das Profil der Transportvertiefung kann aber auch den Erfordernissen der jeweiligen Mitnahmevorrichtung spezifisch angepasst werden, um ein optimales Ausstossvolumen zu erzielen. Insbesondere ist eine a-zentrisch ausgebildete, in ihrer Tiefe und Breite veränderliche und sich zum Auslass hin verjüngende Transportbahn, in welcher sich der Transportkörper zentrisch bewegt, eine vorteilhafte Ausführungsform, um das Schüttgut gezielt zur Auslassöffnung zu transportieren.

Im Falle besonders gut haftender pulverförmiger Substanzen, ist eine Abstreifvorrichtung im Bereich der Auslassöffnung vorgesehen. Diese Abstreifvorrichtung ist vorzugsweise an die Höhenverstellung des Transportkörpers gekoppelt, so dass bei axialer Verschiebung des Transportkörpers die Abstreifvorrichtung stets einen eingestellten Abstand beibehält und somit in vollem Umfang wirksam ist. Entsprechend der Ausführung der Vorrichtungen zur Mitnahme der Partikel an der Unterseite des Transportkörpers, beispielsweise als quer zum Ringumfang verlaufende Transportschlitze oder Transportstege oder als im Ringumfang liegende ausgeformte Nut, kann die Abstreifvorrichtung entweder mit konkaver Aussparung oder mit einem überstehenden in eine Nut eingreifenden Finger ausgebildet sein. Auch eine Ausführung mit mehreren kammförmig angeordneten Fingern ist möglich, beispielweise, wenn mehrere Transportnuten an der Unterseite des Transportkörpers vorhanden sind.

Eine besonders vorteilhafte Ausbildung der Erfindung sieht eine den Transportkörper haltende Welle zentrisch nach unten aus dem die Dosiereinrichtung beinhaltenden Deckel ragend vor, die von einem sich auf der der Auslassöffnung gegenüberliegenden Seite befindlichen Motor angetrieben wird.

Für weniger rieselfähige Schüttgüter weist die Erfindung in einer bevorzugten Ausführungsform Mittel zum Rühren im Vorratsbehälter sowie eine Vibrationseinrichtung, die ausserhalb des Vorratsbehälters angebracht sein kann, auf.

Es versteht sich von selbst, dass der Dosiervorgang mittels der beschriebenen Dosiereinrichtung auch automatisiert werden kann, wobei einerseits eine Rechen- und Regeleinheit, die auch in die Waage integriert sein kann, den Ausstossvorgang derart steuert, dass bei Erreichen des Sollgewichts dieser beendet wird und andererseits eine Zuführeinrichtung angesteuert wird, die das nächste zu befüllende Gefäss der Waage zuführt, nachdem das vorhergehende Gefäss gemäss einer Vorgabe befüllt ist.

Die folgende Beschreibung eines Ausführungsbeispiels erläutert die Erfindung anhand der Zeichnungen. Es zeigen:
- Figur 1:: eine schematische Seitenansicht der Einrichtung;
- Figur 2:: eine perspektivische, teilweise ausgeschnittene Darstellung einer Transport- und Ausstossvorrichtung;
- Figur 3:: eine in den Deckel integrierte Transport- und Ausstossvorrichtung mit einem Transportkörper in seiner Offenstellung mit einer bevorzugten Ausführungsform der Abstreifvorrichtung am Auslass, im Schnitt;
- Figur 4:: eine in den Deckel integrierte Transport- und Ausstossvorrichtung mit einem Transportkörper in seiner Geschlossenstellung mit einer bevorzugten Ausführungsform der Abstreifvorrichtung am Auslass, im Schnitt
- Figur 5:: einen horizontalen Schnitt durch den Deckel mit einer weiteren Ausführungsform der Transportvertiefung, und
- Figur 6:: eine Antriebsvorrichtung mit einer Aufsteckvorrichtung, in Draufsicht.

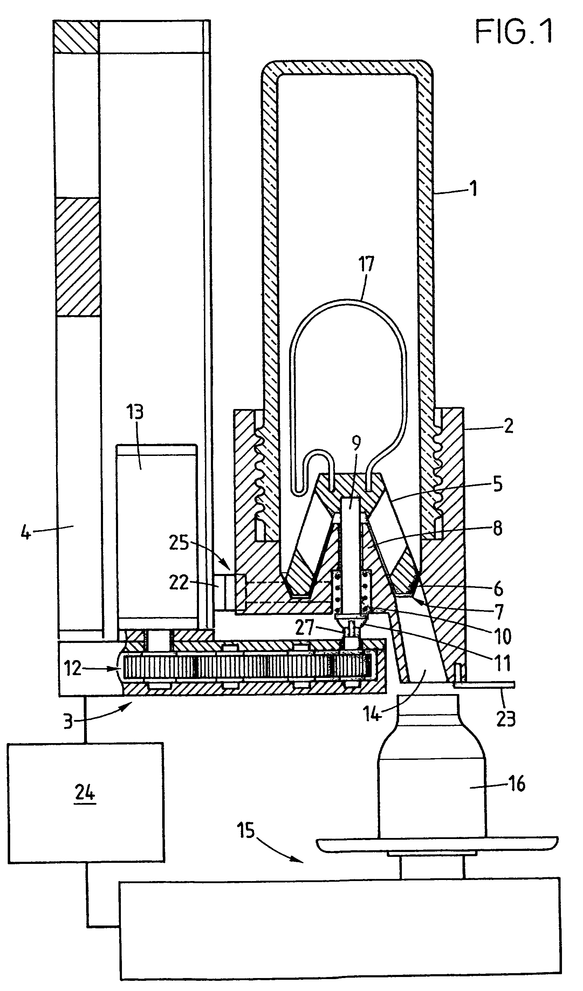

Der vorzugsweise aus Glas bestehende Vorratsbehälter 1, der durch den Deckel 2, vorzugsweise mit einem Schraubverschluss, verschlossen ist, wird seitlich mittels einer Haltevorrichtung in Form einer Aufsteckvorrichtung 25 an der Halterung 4 befestigt, wie in Figur 1 dargestellt ist.

In den Deckel 2 ist ein sich nach oben verjüngender Rotationskörper, der den Transportkörper 5 für das auszutragende Schüttgut bildet, integriert. An seiner Unterseite 6 weist der Transportkörper 5 ein ringförmiges, sich nach unten verjüngendes Profil auf.

Der Deckel 2 weist eine ringförmige Transportvertiefung 7 auf, deren Ausnehmungs-Profil sich, angepasst an das Profil an der Unterseite des Transportkörpers 5, ebenfalls nach unten verjüngt und deren innere Seitenwände hier mit den Seitenwänden eines Kegels 8 zur Achse des Rotationskörpers identisch sind.

Eine entlang der Achse des Rotationskörpers verlaufende Welle 9 ist im Kegel 8 drehbar gelagert und ragt aus dem Deckel 2 an dessen Unterseite hervor, wo sie eine Ankuppelstelle 11 für einen Antrieb besitzt. An dieser Ankuppelstelle 11 greift auch die Höhenverstellung des Transportkörpers 5 an. Die Feder 10 drückt den Transportkörper 5 nach unten in die Transportvertiefung 7. Der Antrieb verfügt über eine in die Welle 9 des Transportkörpers 5 aus- und einfahrbare, somit vertikal bewegbare, Antriebswelle 27, die von unten in die Ankuppelstelle 11 eingreift und die Welle 9 entgegen der Kraft der Feder 10 nach oben drückt. Dabei wird die Transportvertiefung 7 für das auszutragende Schüttgut als Folge der Höhenverstellung des Transportkörpers 5 geöffnet, und bei gleichzeitiger Rotation des Transportkörpers 5 wird das Schüttgut ausgetragen.

Über ein Getriebe 12 ist die Antriebswelle 27 mit einem Motor 13 verbunden, der sich seitlich vom Vorratsbehälter 1, in die Halterung 4 integriert, befindet. Auf diese Weise steht auf der der Halterung 4 mit dem Motor 13 gegenüberliegenden Seite genügend Raum zur Verfügung für den dort angebrachten Auslass 14, der vorzugsweise aus einem sich konisch nach unten erweiternden rohrförmigen Kanal besteht. Damit ist eine gezielte Austragung des Schüttguts in einen sich auf einer Waage 15 befindlichen Behälter 16 mit kleinem Öffnungsquerschnitt verlustfrei möglich.

Die Auslassöffnung 14, die durch vertikales Verschieben des Transportkörpers 5 weitgehend verschliessbar ist, kann mittels einer Blende 23, vollständig verschlossen werden. Dabei kann die Blende 23 um eine Achse aus- und einklappbar ausgebildet sein oder eine Öffnung besitzen, die durch horizontales Verschieben der Blende im Offen-Zustand sich direkt unter der Auslassöffnung befindet und im Geschlossen-Zustand sich um ihre in Verschiebungsrichtung grösste Ausdehnung versetzt neben der Auslassöffnung 14 befindet. Somit kann nach vollständigem Verschluss der Auslassöffnung 14 der Vorratsbehälter 1 auch als Lagerbehälter verwendet werden und es ist gewährleistet, dass beim Manipulieren des Vorratsbehälters 1 keine Schüttgutpartikel aus der Auslassöffnung 14 fallen.

Der Transportkörper ist an seiner Oberseite mit einem Rühraufsatz 17 aus Draht bestückt, was der Auflockerung von dem sich im Vorratsbehälter 1 befindlichen Schüttgut dient.

Um den Dosiervorgang zu automatisieren, verfügt die Dosiervorrichtung über eine mit der Waage 15 verbundene Rechen- und Regeleinheit 24, die die Antriebseinheit 3 derart steuert, dass bei Erreichen des Sollgewichts der Ausstossvorgang beendet wird. Selbstverständlich kann die Rechen- und Regeleinheit 24 auch in die Waage 15 integriert sein.

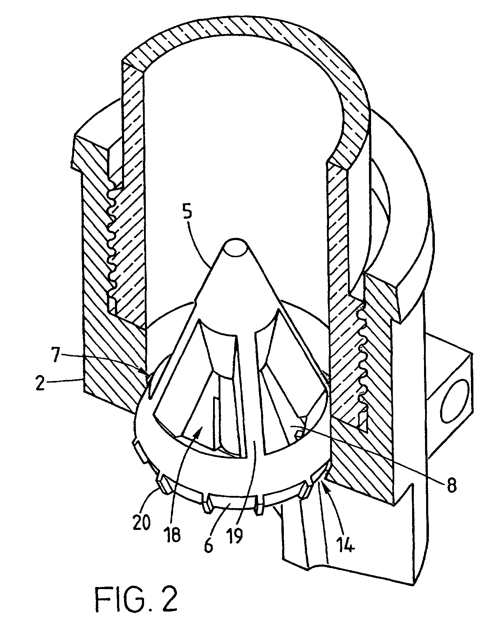

In Figur 2 ist die im Deckel 2 integrierte Transport- und Ausstossvorrichtung mit dem Transportkörper 5 in einer möglichen Ausführung dargestellt. Der kegelmantelförmig ausgebildete Transportkörper 5 weist im Kegelmantel mehrere durchgehende Öffnungen 18 auf, durch die das Schüttgut auf der inneren Seite zwischen dem Transportkörper 5 und dem ihn tragenden Kegel 8 nach unten in die Transportvertiefung 7 fällt. Die zwischen den Öffnungen befindlichen Stege oder Speichen 19 können als schaufelförmige Mitnahmemittel ausgebildet sein, die das Schüttgut den Öffnungen 18 zuführen. An der Unterseite 6 des Transportkörpers 5 ist ebenfalls eine Vorrichtung zur Mitnahme der Partikel vorgesehen, die in der dargestellten Ausführungsform als quer zur ringförmigen Unterseite 6 verlaufende Stege 20 ausgebildet ist. Ebenso ist die Ausbildung eines zweiteiligen Transportkörpers 5 möglich, bei dem die Vorrichtung zur Mitnahme der Partikel aus einem Weichpolymer, beispielsweise Silikon, besteht und auf den Transportkörper, vorzugsweise austauschbar, aufgesetzt ist. In diesem Falle kann die Vorrichtung zur Mitnahme der Partikel als Finger oder als Bürsten ausgebildet sein. Die Vorrichtung zur Mitnahme der Partikel kann auch aus quer zum Ringumfang verlaufenden Transportschlitzen bestehen, oder eine im Ringumfang liegende ausgeformte Nut sein. Diese Vorrichtung zur Mitnahme der Partikel schiebt das Schüttgut auf die Auslassöffnung 14 zu.

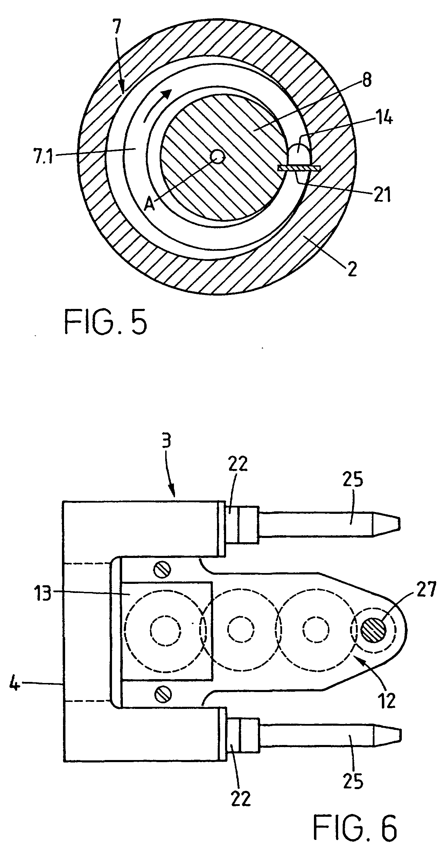

Die Figur 5 zeigt anhand eines horizontalen Schnitts durch den Deckel 2 auf der Höhe des oberen Endes des Auslasses 14 bei herausgenommenem Transportkörper 5 eine weitere Ausführungsform einer Transportvertiefung 7. Diese asymmetrisch ausgebildete Transportvertiefung 7 variiert sowohl in ihrer Tiefe (nicht sichtbar) als auch in ihrer Breite derart, dass sie sich zum Auslass 14 hin verjüngt. In der Figur 5 ist der Boden 7.1 der Transportvertiefung 7 unschwer als Kreisring zentrisch um die Achse A der Welle 9 des Transportkörpers 5 zu erkennen. Allerdings ist der Boden 7.1 der Transportvertiefung 7 nicht auf eine in horizontaler Projektion ringförmige Ausbildung beschränkt, sondern die Transportvertiefung kann beispielsweise ebenso ein an ihrer Unterseite halbkreisförmiges Profil aufweisen, dessen Radius sich zur Auslassöffnung 14 hin verkleinert.

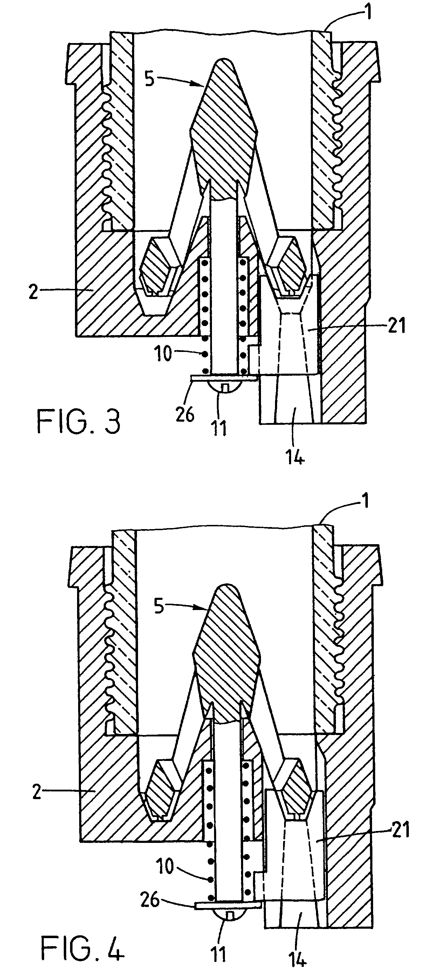

Die Figur 3 zeigt einen Längsschnitt durch den unteren Bereich des Vorratsbehälters 1 mit Deckel 2 und Transportvorrichtung 5 in der Offenstellung. Die Figur 4 zeigt die selbe Darstellung, jedoch in der Geschlossenstellung des Transportkörpers 5. An der Auslassöffnung 14 ist eine Abstreifvorrichtung 21, wie in den Figuren 3 und 4 dargestellt, vorgesehen, damit auch stark haftende und koagulierende Pulver dosiert werden können. Die Abstreifvorrichtung 21 ist über eine Abstützscheibe 26 an die mittels einer Feder 10 bewerkstelligte Höhenverstellung des Transportkörpers 5 gekoppelt und gewährleistet dadurch die Beibehaltung eines eingestellten Abstands und damit die vollumfängliche Wirksamkeit der Abstreifvorrichtung 21 bei jeder Position der Höheneinstellung. Gemäss der verschiedenen Ausführungsformen der Vorrichtung zur Mitnahme der Partikel kann auch die Abstreifvorrichtung 21 verschiedenartig ausgestaltet sein, beispielsweise in Form eines in eine Nut eingreifenden Fingers

Über die an der Antriebsvorrichtung 3 hervor ragende Aufsteckvorrichtung 25, welche die Figur 6 mit Details zeigt, wird der Vorratsbehälter 1 mit Deckel 2 aufgesteckt. In die Antriebsvorrichtung 3 kann, beispielsweise nahe der Aufsteckvorrichtung 25, ein Generator 22 zur Erzeugung von Vibrationen integriert sein. Die Aufsteckvorrichtung 25 überträgt die Vibrationen auf den Vorratsbehälter 1, insbesondere auf den die Transport- und Ausstossvorrichtung enthaltenden Deckel 2, damit das zu dosierende Schüttgut im Falle von pappiger Konsistenz besser rieselfähig bleibt und leichter durch die Öffnungen 18 des Transportkörpers 5 aber auch aus der Auslassöffnung 14 fällt.

## Patentansprüche

1. Dosiereinrichtung für Schüttgüter, vorwiegend pulverförmige Substanzen, mit einer mit dem zu dosierenden Schüttgut beschickbaren Waage (15), einem an seiner Unterseite zu verschliessenden Vorratsbehälter (1) für das Schüttgut, einer Transport- und Ausstossvorrichtung mit einem vertikal verstellbaren und um eine im Wesentlichen vertikale Achse rotierbaren Transportkörper (5) sowie einem Auslass (14) für das zu dosierende Schüttgut, **dadurch gekennzeichnet, dass** der Vorratsbehälter (1) an seiner Unterseite mit einem Deckel (2) verschliessbar und die Transport- und Ausstossvorrichtung in den Deckel (2) integriert ist, der Transportkörper (5) an seiner ringförmigen Unterseite (6) ein sich nach unten verjüngendes Radialprofil aufweist, mit dem er in eine ringförmige Transportvertiefung (7) des Deckels (2) eingreift, deren Profil auf das Radialprofil der ringförmigen Unterseite (6) des Transportkörpers (5) abgestimmt ist, und dass zur gezielten örtlichen Austragung der Substanz die Auslassöffnung (14) sich seitlich der Achse auf der Ringbahn des Transportkörpers (5) befindet.

2. Dosiereinrichtung nach Anspruch 1, **dadurch gekennzeichnet, dass** der Transportkörper (5) rotationssymmetrisch und sich nach oben zu seiner Achse hin verjüngend, insbesondere als Kegelmantel, ausgebildet ist.

3. Dosiereinrichtung nach Anspruch 1 oder 2, **dadurch gekennzeichnet, dass** der Transportkörper (5) mit Öffnungen (18) für den Durchtritt des zu dosierenden Schüttguts versehen ist.

4. Dosiereinrichtung nach Anspruch 3, **dadurch gekennzeichnet, dass** die die Öffnungen (18) begrenzenden Speichen (19) als Mitnahmenmittel für das zu dosierende Schüttgut, insbesondere als Schaufeln, ausgebildet sind.

5. Dosiereinrichtung nach einem der Ansprüche 1 bis 4, **dadurch gekennzeichnet, dass** der Transportkörper (5) an seiner ringförmigen Unterseite (6) über eine Vorrichtung zur Mitnahme für das zu dosierende Schüttgut verfügt.

6. Dosiereinrichtung nach Anspruch 5, **dadurch gekennzeichnet, dass** Transportkörper (5) mit unterschiedlichen Vorrichtungen zur Mitnahme austauschbar in ein und demselben Deckel (2) einsetzbar sind.

7. Dosiereinrichtung nach Anspruch 5 oder 6, **dadurch gekennzeichnet, dass** die Vorrichtung zur Mitnahme der Partikel des Schüttguts in Form von in regelmässiger Folge quer zur Ringbahn angeordneten, spaltförmige Aussparungen oder Stegen (20) ausgebildet ist.

8. Dosiereinrichtung nach Anspruch 5 oder 6, **dadurch gekennzeichnet, dass** der Transportkörper (5) über eine aufsetzbare Vorrichtung zur Mitnahme der Partikel verfügt, die in einer speziellen Ausbildungsform entweder als aus Weichpolymermaterial bestehenden Fingern oder als Bürsten ausgebildet ist.

9. Dosiereinrichtung nach Anspruch 5 oder 6, **dadurch gekennzeichnet, dass** als Vorrichtung zur Mitnahme mindestens eine in Richtung der Ringbahn liegende Nut ausgebildet ist.

10. Dosiereinrichtung nach einem der Ansprüche 1 bis 9, **dadurch gekennzeichnet, dass** die ringförmige Transportvertiefung (7) ein in ihrer Tiefe und Breite variierendes, insbesondere sich zur Auslassöffnung (14) hin verjüngendes Profil aufweist.

11. Dosiereinrichtung nach einem der Ansprüche 1 bis 10, **dadurch gekennzeichnet, dass** sich in dem Vorratsbehälter (1), insbesondere am Transportkörper (5) angebrachte und sich mit diesem drehende, zusätzliche Mittel zum Rühren und Auflockern des Schüttguts (17) befinden.

12. Dosiereinrichtung nach einem der Ansprüche 1 bis 11 , **dadurch gekennzeichnet, dass** sich an der Auslassöffnung (14) eine Abstreifvorrichtung (21) befindet.

13. Dosiereinrichtung nach Anspruch 12, **dadurch gekennzeichnet, dass** die Abstreifvorrichtung (21) bei einer axialen Verschiebung des Transportkörpers (5) einen eingestellten Abstand zu diesem stets beibehält.

14. Dosiereinrichtung nach einem der Ansprüche 1 bis 13, **dadurch gekennzeichnet, dass** eine den Transportkörper (5) haltende Welle (9) zentrisch nach unten aus dem die Transport- und Ausstossvorrichtung beinhaltenden Deckel (2) vorragt und an eine Antriebswelle (27) gekuppelt werden kann.

15. Dosiereinrichtung nach einem der Ansprüche 1 bis 14, **dadurch gekennzeichnet, dass** eine Antriebsvorrichtung (3) mit einem Motor (13), einer drehenden und vertikal bewegbaren Antriebswelle (27) und einer Haltevorrichtung (25) für den Vorratsbehälter (1) so angeordnet ist, dass der Vorratsbehälter (1) in der gehaltenen Lage mit seiner der Auslassöffnung (14) abgewandten Seite über einem Teil der Antriebseinheit (3) liegt und eine den Transportkörper (5) haltende Welle (9) mit der Antriebswelle (27) im Eingriff ist.

16. Dosiereinrichtung nach Anspruch 15, **dadurch gekennzeichnet, dass** die Antriebseinheit (3) von einer durch die Waage (15) beeinflussten Rechen- und Regeleinheit (24) gesteuert wird.

17. Dosiereinrichtung nach Anspruch 16, **dadurch gekennzeichnet, dass** die Rechen- und Regeleinheit (24) in die Waage (15) integriert ist.

18. Dosiereinrichtung nach einem der Ansprüche 1 bis 17, **dadurch gekennzeichnet, dass** sich ausserhalb des Vorratsbehälters (1) Mittel zur Vibration oder zum Schütteln (22) des Vorratsbehälters (1) befinden.

19. Dosiereinrichtung nach einem der Ansprüche 1 bis 18, **dadurch gekennzeichnet, dass** an der Unterseite der Auslassöffnung (14) eine Blende (23) zum Verschluss der Auslassöffnung (14) vorgesehen ist.

20. Dosiereinrichtung nach einem der Ansprüche 1 bis 19, **dadurch gekennzeichnet, dass** der verschlossene Vorratsbehälter (1) als Lagerbehälter verwendbar ist.

## Claims

1. Dosage-dispensing apparatus for pourable materials, primarily substances in powder form, with a balance (15) for weighing the doses of the pourable material to be dispensed, a reservoir container (1) for the pourable material that can be closed at its underside, a conveying and discharging device with a vertically adjustable conveyor body (5) rotating about a substantially vertical axis, as well as an outlet opening (14) for the pourable material to be dispensed, **characterized in that** the reservoir container (1) is closable at its underside with a cover (2) and the conveying and discharging device is incorporated in the cover (2), that the ring-shaped bottom (6) of the conveyor body (5) has a radial profile that becomes narrower in the downward direction, said narrowing radial profile reaching into a ring-shaped conveyor channel (7) that is recessed in the cover (2), the conveyor channel (7) having a profile that conforms to the radial profile of the ring-shaped bottom (6) of the conveyor body (5), and the outlet opening (14) being arranged eccentrically of the axis in the ring-shaped path swept by the conveyor body (5), for a directionally guided and locally concentrated discharge of the substance.

2. Dosage-dispensing apparatus according to claim 1, **characterized in that** the conveyor body (5) is rotationally symmetric, narrowing down towards its axis in the upward direction, in particular with a conical surface.

3. Dosage-dispensing apparatus according to claim 1 or 2, **characterized in that** the conveyor body (5) has openings (18) for the passage of the material to be dispensed.

4. Dosage-dispensing apparatus according to claim 3, **characterized in that** the spokes (19) which delimit the openings (18) are configured as a means for taking along the material to be dispensed, being configured in particular in the shape of shovels.

5. Dosage-dispensing apparatus according to one of the claims 1 to 4, **characterized in that** the conveyor body (5) has at its ring-shaped bottom (6) a device for taking along the pourable material to be dispensed.

6. Dosage-dispensing apparatus according to claim 5, **characterized in that** conveyor bodies (5) with different devices for taking along the material are interchangeably installable in one and the same cover (2).

7. Dosage-dispensing apparatus according to claim 5 or 6, **characterized in that** the device for taking along the particles of the pourable material is configured in the form of slot-shaped cutouts or ridges (20) that are arranged in regular sequence, transverse to the ring-shaped path.

8. Dosage-dispensing apparatus according to claim 5 or 6, **characterized in that** the conveyor body (5) has a device for taking along the particles, which device can be set in place on the conveyor body and, in a special design version, is configured either in the form of fingers of a soft polymer material or in the form of brushes.

9. Dosage-dispensing apparatus according to claim 5 or 6, **characterized in that** the means for taking along the particles is configured as a groove running in the direction of the ring-shaped path.

10. Dosage-dispensing apparatus according to one of the claims 1 to 9, **characterized in that** the ring-shaped conveyor channel (7) has a profile that varies in its depth and width and in particular becomes narrower towards the outlet opening (14).

11. Dosage-dispensing apparatus according to one of the claims 1 to 10, **characterized in that** inside the reservoir container (1) there are additional means for stirring and loosening the pourable material (17), which additional means are arranged in particular on the conveyor body (5) and are rotating with the latter.

12. Dosage-dispensing apparatus according to one of the claims 1 to 11, **characterized in that** there is a wiper device (21) at the outlet opening (14).

13. Dosage-dispensing apparatus according to claim 12, **characterized in that** the wiper device (21) constantly maintains a pre-set distance from the conveyor body (5) when the latter moves in the axial direction.

14. Dosage-dispensing apparatus according to one of the claims 1 to 13, **characterized in that** a shaft (9) holding the conveyor body (5) protrudes downward in a central position from the cover (2) that contains the conveying and discharging device and that said shaft (9) can be coupled to a driving shaft (27).

15. Dosage-dispensing apparatus according to one of the claims 1 to 14, **characterized in that** a drive mechanism (3) with a motor (13), a rotating, vertically movable driving shaft (27), and a holder device (25) for the reservoir container (1) is arranged in such a manner that in the position in which the reservoir container (1) is held, the side of the reservoir container (1) that is facing away from the outlet opening (14) lies above a part of the drive unit (3), and a shaft (9) holding the conveyor body (5) is engaged with the driving shaft (27).

16. Dosage-dispensing apparatus according to claim 15, **characterized in that** the drive unit (3) is controlled by a computer/controller unit (24) which is influenced by the balance (15).

17. Dosage-dispensing apparatus according to claim 16, **characterized in that** the computer/controller unit (24) is incorporated in the balance (15).

18. Dosage-dispensing apparatus according to one of the claims 1 to 17, **characterized in that** means (22) for vibrating or shaking the reservoir container (1) are arranged outside of the reservoir container (1).

19. Dosage-dispensing apparatus according to one of the claims 1 to 18, **characterized in that** at the underside of the outlet opening (14) a shutter (23) is provided for the purpose of closing off the outlet opening (14).

20. The apparatus according to one of the claims 1 to 19, **characterized in that** the closed reservoir container (1) can be used as storage container.

## Revendications

1. Dispositif de dosage pour produits en vrac, principalement des subsistances pulvérulentes, comprenant une balance (15) pouvant être alimentée avec le produit en vrac à doser, un récipient de dosage (1) à fermer sur son côté inférieur pour le produit en vrac, un dispositif de transport et d'éjection avec un corps de transport (5) déplaçable verticalement et pouvant tourner autour d'un axe sensiblement vertical et une évacuation (14) pour le produit en vrac à doser, **caractérisé en ce que** le récipient de dosage (1) peut être fermé sur son côté inférieur avec un couvercle (2) et le dispositif de transport et d'éjection est intégré dans le couvercle (2), le corps de transport (5) présente sur son côté inférieur (6) de forme annulaire un profil radial se rétrécissant vers le bas, avec lequel il s'engage dans une cavité de transport (7) de forme annulaire du couvercle (2), dont le profil est adapté au profil radial du côté inférieur (6) de forme annulaire du corps de transport (5), et **en ce que**, pour l'évacuation locale adéquate de la substance, l'ouverture d'évacuation (14) se trouve à côté de l'axe sur la trajectoire annulaire du corps de transport (5).

2. Dispositif de dosage selon la revendication 1, **caractérisé en ce que** le corps de transport (5) est conçu symétrique en rotation et se rétrécissant vers le haut en direction de son axe, en particulier comme une enveloppe conique.

3. Dispositif de dosage selon la revendication 1 ou 2, **caractérisé en ce que** le corps de transport (5) est pourvu d'ouvertures (18) pour le passage du produit en vrac à doser.

4. Dispositif de dosage selon la revendication 3, **caractérisé en ce que** les rayons (19) délimitant les ouvertures (18) sont conçus comme des moyens d'entraînement pour le produit en vrac à doser, en particulier comme des ailettes.

5. Dispositif de dosage selon l'une quelconque des revendications 1 à 4, **caractérisé en ce que** le corps de transport (5) dispose sur son côté inférieur (6) de forme annulaire d'un dispositif d'entraînement pour le produit en vrac à doser.

6. Dispositif de dosage selon la revendication 5, **caractérisé en ce que** des corps de transport (5) avec différents dispositifs pour l'entraînement peuvent être insérés de façon amovible dans un seul et même couvercle (2).

7. Dispositif de dosage selon la revendication 5 ou 6, **caractérisé en ce que** le dispositif pour l'entraînement des particules du produit en vrac est conçu sous la forme d'évidements ou de barrettes (20) en forme de fente et disposés sous la forme d'une succession régulière transversalement à la trajectoire annulaire.

8. Dispositif de dosage selon la revendication 5 ou 6, **caractérisé en ce que** le corps de transport (5) dispose d'un dispositif pouvant être placé dessus pour l'entraînement des particules, qui est conçu dans un mode de réalisation spécial soit sous la forme de doigts à base de matériau en polymère souple soit sous la forme de brosses.

9. Dispositif de dosage selon la revendication 5 ou 6, **caractérisé en ce qu'**au moins une rainure disposée en direction de la trajectoire annulaire est conçue comme dispositif pour l'entraînement.

10. Dispositif de dosage selon l'une quelconque des revendications 1 à 9, **caractérisé en ce que** la cavité de transport (7) de forme annulaire présente un profil variant dans sa profondeur et dans sa largeur et en particulier se rétrécissant en direction de l'ouverture d'évacuation (14).

11. Dispositif de dosage selon l'une quelconque des revendications 1 à 10, **caractérisé en ce que** des moyens supplémentaires, placés en particulier sur le corps de transport (5) et tournant avec celui-ci, se trouvent dans le récipient de dosage (1) pour l'agitation et l'aération du produit en vrac (17).

12. Dispositif de dosage selon l'une quelconque des revendications 1 à 11, **caractérisé en ce qu'**un dispositif racleur (21) se trouve sur l'ouverture d'évacuation (14).

13. Dispositif de dosage selon la revendication 12, **caractérisé en ce que** le dispositif racleur (21) conserve toujours, lors d'un déplacement axial du corps de transport (5), une distance ajustée par rapport à ce corps.

14. Dispositif de dosage selon l'une quelconque des revendications 1 à 13, **caractérisé en ce qu'**un arbre (9) maintenant le corps de transport (5) dépasse de façon centrée vers le bas du couvercle (2) contenant le dispositif de transport et d'éjection et peut être couplé à un arbre d'entraînement (27).

15. Dispositif de dosage selon l'une quelconque des revendications 1 à 14, **caractérisé en ce qu'**un dispositif d'entraînement (3) est disposé avec un moteur (13), un arbre d'entraînement (27) rotatif et déplaçable verticalement et un dispositif de retenue (25) pour le récipient de dosage (1) de telle sorte que le récipient de dosage (1) est disposé dans la position maintenue avec son côté opposé à l'ouverture d'évacuation (14) sur une partie de l'unité d'entraînement (3) et un arbre (9) maintenant le corps de transport (5) est en prise avec l'arbre d'entraînement (27).

16. Dispositif de dosage selon la revendication 15, **caractérisé en ce que** l'unité d'entraînement (3) est commandée par une unité de calcul et de réglage (24) influencée par la balance (15).

17. Dispositif de dosage selon la revendication 16, **caractérisé en ce que** l'unité de calcul et de réglage (24) est intégrée dans la balance (15).

18. Dispositif de dosage selon l'une quelconque des revendications 1 à 17, **caractérisé en ce que** des moyens pour la vibration ou l'agitation (22) du récipient de dosage (1) se trouvent à l'extérieur du récipient de dosage (1).

19. Dispositif de dosage selon l'une quelconque des revendications 1 à 18, **caractérisé en ce qu'**un cache (23) pour la fermeture de l'ouverture d'évacuation (14) est prévu sur le côté inférieur de l'ouverture d'évacuation (14).

20. Dispositif de dosage selon l'une quelconque des revendications 1 à 19, **caractérisé en ce que** le récipient de dosage (1) fermé peut être utilisé comme récipient de stockage.
